# EUROPEAN PATENT APPLICATION

(11) **EP 1 561 558 A2**
(43) Date of publication of application: **10.08.2005**
(21) Application number: 05100234.3
(22) Date of filing: 17.01.2005
(51) Int. Cl.: B29B 17/00, B30B 9/32

(54) **Apparatus for compacting plastic containers**

(30) Priority: 03.02.2004 IT PN20040002
(71) Applicant: GRUSAN di SANDRIN Giannino & C. s.a.s., 33080 Porcia, Pordenone (IT)
(72) Inventor: Sandrin, Giannino, 33080, Porcia (Pordenone) (IT)
(74) Representative: Giugni, Valter

(57) **Abstract**

Apparatus for compacting a container of plastic material, in particular a bottle, through heat-assisted deformation so as to reduce the size thereof to a considerable extent in view of facilitating the collection, handling and transport of waste containers to be recycled. The apparatus is comprised of a body (11) with a bell-shaped portion (12), which is adapted to be applied to the mouthpiece of the container (30), and a sleeve-like portion (13) that is adapted to connect said bell-shaped portion (12) with the air delivery nozzle of an electric hot-air blower (20), such as a hairdryer or the like, to deliver hot air both into the container and onto it.

The apparatus, which is particularly simple and inexpensive, enables the container to be compacted to be heated in a progressive, even and homogeneous manner following the deformation of the container, owing to the heating being concentrated in the zone of the mouthpiece of the container.

## Description

The present invention refers to an apparatus for compacting a plastic container of any kind whatsoever, in particular a plastic bottle, thereby reducing the size thereof to a considerable extent in view of making it more convenient for such used containers to be disposed of, collected and transported to final recycling.

In particular, the apparatus according to the present invention enables empty containers made of thermoplastic material to be compacted by subjecting them to the action of heat, possibly combined with a slight mechanically induced pressure.

The apparatus is aimed at bringing in a solution to the increasingly serious problem deriving from a constantly expanding use of plastic containers, which, if not conveniently compacted, end up by causing large, bulky masses demanding a lot of space to pile up at the collection sites.

Various apparatuses of this kind have been proposed in the art in view of solving this problem, all of which conceived so as to enable a thermal action (heating) to be used in combination with a mechanical action (compression). Heat, in fact, is effective in softening the plastic material, while the pressure is effective in compacting the container.

Solutions of this kind are described for example in patent publications such as EP 0 775 562, EP 1 228 849, FR 2 694 722 and FR 2 673 390. A major drawback shared by all such apparatuses lies in the complexity of both their construction and operation, since they call for the use of electric heating elements and, possibly, motor-driven fans that must be built-in, i.e. incorporated in the apparatus, and that must most obviously be connected to a generally external power supply source.

A conceptually different solution is the one described in FR 2 734 509, which proposes the use of an electrically powered hot-air blower to soften a plastic bottle. However, even the solution disclosed in this French patent publication is scarcely rational and not much advantageous, since it calls for a specific receptacle to be provided, in which the bottle has to be inserted. Furthermore, such receptacle must also be provided with an aperture that is adapted to accommodate the delivery nozzle of the electric blower; it can be most readily appreciated that, for differently sized and shaped electric hot-air blowers to be capable of being used in this connection, the need would arise for specific adaptors to be specially provided. A further drawback connected with this solution is represented by the need for a lid to be provided, which must be applied onto the cap or the neck of the bottle in view of pressing it closely within the receptacle. Finally, it should be noticed that the hot air generated by the electric blower is in this case blown against a side of the bottle and is then caused to circulate around the same bottle by following the inner wall of the receptacle. Of course, this is by far not an optimum condition, since the bottle most clearly fails to be heated up in a desirable even manner throughout the entire surface thereof.

It therefore is a main object of the present invention to provide an apparatus for compacting plastic containers, which, by making use of a regular electric hot-air blower as a separate heating element, is extremely simple in its construction and very rational to operate and use.

Within this main object, a basic purpose of the present invention is to provide a device that forms a deformable adaptor for the delivery nozzle of any type of electric hot-air blower whatsoever, so as to enable an even, homogeneous heat-treatment process to be brought about to produce a gradual heating pattern that follows the deformation of the plastic container to be compacted, thanks to the heating effect being concentrated in the zone of the mouth of the same container.

Equally important are also the extremely low cost of the whole apparatus and the particularly small size thereof, so as to as much as possible favour its use in residential applications, i.e. households, further to communities such as office buildings, canteens and the like.

According to the present invention, these and further aims are reached in a compacting apparatus incorporating the features and characteristics as recited in the appended claims 1 et seq.

Features and advantages of the present invention will anyway be more readily understood from the description that is given below by way of nonlimiting example with reference to the accompanying drawings, in which:
- Figure 1 is a schematical, cross-sectional view of an apparatus according to the present invention with a fully compacted bottle therewithin;
- Figure 2 is a schematical, cross-sectional view along the line A-A of the apparatus shown in Figure 1.

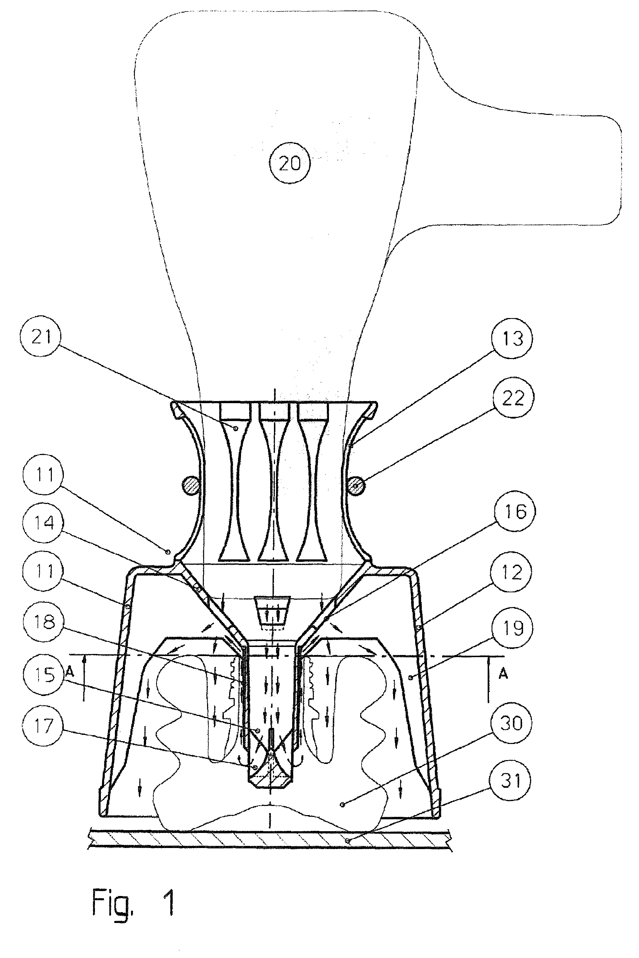

The apparatus according to the present invention, as shown in Figure 1, is comprised of a body 11 made of heat-resistant material and shaped into two distinct portions, wherein the first one of these two portions is essentially in the shape of a bell 12, whereas the second portion is in the form of a sleeve 13 of a substantially cylindrical shape, the wall of which is deformable.

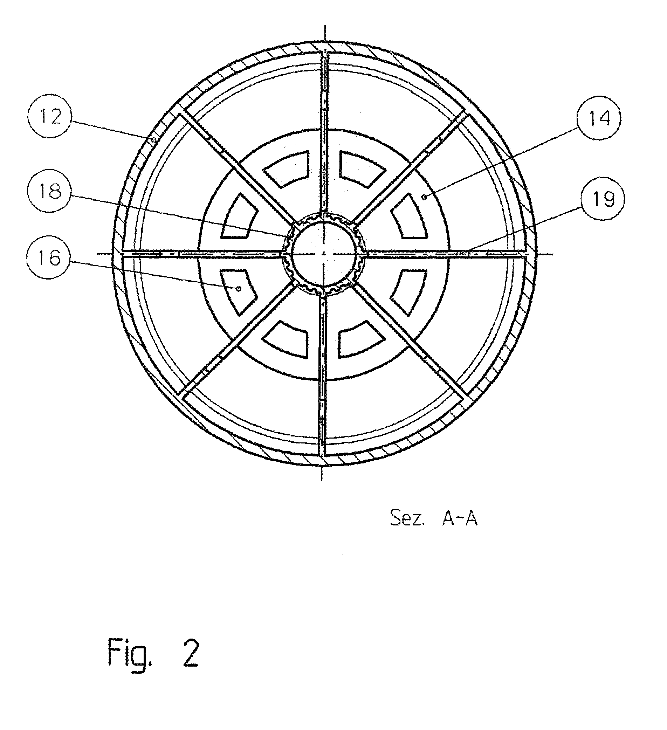

The bell-shaped portion 12 must be applied against the neck of the plastic bottle to be compacted; it is preferably rigid and contains centrally in its interior a funnel-like portion 14 extending into a tubular prolongation 15. As best shown in Figure 2, the funnel-like portion 14 has an array of equally spaced apertures 16, i.e. apertures that are arranged at regular intervals from each other all along the inclined circumferential wall, whereas the tubular extension 15 has the end portion thereof, which is so shaped as to form a kind of baffle to divert the hot air that is blown into the interior of the bottle to be compacted. To this purpose, the end portion of the tubular extension 15 is provided with apertures 17 (Figure 1) made in the cylindrical wall near the same end portion, and it is so shaped as to direct the flow of the hot air outflowing from the apertures 17 towards the mouth portion of the bottle. In addition, the tubular extension 15 is provided on the outer surface thereof with ribs 18, which form an array of longitudinally extending channels to enable the air to freely escape from the interior of the bottle to be compacted, so as to prevent any excessive pressure from building up internally.

Finally, in view of ensuring that the apparatus 11 is capable of readily self-centering onto the neck of the bottle to be compacted, the bell-shaped portion 12 is provided internally with fins 19 having a polygonal profile, which extend radially from the inner wall of the bell up to the tubular extension 15. This construction feature is effective in adding strength and stiffness to the bell-shaped portion.

The sleeve 13, which is moulded integrally with the bell-shaped portion 12 into a unitary piece, must be deformable in order to be capable of adapting to the different diameters of the air delivery nozzles of different types of electric hot-air blowers 20 (Figure 1). As an electric hot-air blower in this connection, use is made preferably of a hairdryer, i.e. an appliance that is largely available in households. In a preferred manner, the sleeve 13 is given a cylindrical shape, with a side wall provided with an array of apertures 21 that extend equally spaced from each other in an axial direction. An elastic ring 22 is slipped on to the exterior of the sleeve 13 so as to keep the wall of the same sleeve contracted towards the middle axis, in such a manner as to ensure the best possible adaptability to and a tight fit against the nozzle of the electric hot-air blower 20, which is inserted in the sleeve 13 until it eventually abuts against the funnel-shaped portion 14 of the bell-shaped portion 12.

It will of course be readily appreciated that the side wall of the sleeve 13 may also be moulded integrally as a unitary-piece assembly, thereby doing away the need for a separate elastic ring 22 to be additionally assembled.

The apparatus 11 according to the present invention is very simple and convenient to use.

The bottle 30 is placed to rest in a standing, i.e. vertical position on a plane 31 (Figure 1) and the tubular extension 15 of the bell-shaped portion 12 of the apparatus is introduced in the mouthpiece of the bottle 30 up to the point at which said mouthpiece of the bottle enters into contact with the profile of the fins 19. Thereupon, the nozzle of the electric hot-air blower 20 is inserted vertically in the sleeve-like portion 13 until it abuts against the funnel-like portion 14. At this point, the electric hot-air blower 20 is switched on, so that it starts delivering hot air through the apparatus 11, and a slight pressure is at the same time exerted downwards against the resting plane 31. The hot air flows along two distinct paths, as this is best shown by the arrows in Figure 1, wherein the first flow-path moves along the tubular extension 15, enters the bottle through the apertures 17 and exits the bottle through the channels that are defined by the ribs 18 between the neck of the bottle and the tubular extension 15. The second path followed by the hot-air flow runs through the apertures 16 in the funnel-like portion 14 and expands over the outside of the bottle. The whole amount of hot air entering the apparatus as blown by the electric blower flows eventually out from below the bell-shaped portion 14 and is released into the surrounding ambient.

In this manner, the bottle 30 is heated up progressively from the top down to the bottom, both from the outside and the inside, thereby being enabled to deform evenly, homogeneously owing to the combined action of the heat being concentrated in the zone of the neck of the bottle and the pressure being applied to compress the bottle against the resting plane 31 thereof.

By keeping the electric hot-air blower 20 switched on and simply pushing it downwards, the body of the bottle 30 is rapidly caused to crumple up and collapse, until it is compacted to an extremely reduced size, so as this is shown in Figure 1.

An additional benefit deriving from the bottle being so evenly heated up both internally and externally lies in the so-called plastic memory, i.e. springback effect being practically nullified, thereby enabling the volume of the container to be compacted without any recovery of the latter to the original shape.

The whole operation turns out as being extremely simple and effective, since no need arises for the bottle to be anyhow handled upon its having been initially inserted in the apparatus. Furthermore, the combined external and internal heating of the bottles generates the additional advantage of causing possible labels applied onto the same bottle to peel off and come loose, thereby improving the selective recovery conditions of the waste products to be recycled.

It should moreover be noticed that, once the operation is ended, the apparatus can be simply slipped out of the mouthpiece of the bottle, while the latter remains freely resting on the plane 31. Therefore, no physical contact is required between the bottle, which at this point is compacted into a rather hot mass, and the hand of the operator, thereby improving the overall safety of the apparatus when using it.

## Claims

1. Apparatus for compacting a container of plastic material, in particular a bottle, through heat-assisted deformation so as to reduce the size thereof to a considerable extent in view of facilitating the collection, handling and transport of waste containers to be recycled, **characterized in that** it is comprised of a body (11) with a bell-shaped portion (12), which is adapted to be applied to the mouthpiece of the container (30), and a sleeve-like portion (13) that is adapted to connect said bell-shaped portion (12) with the air delivery nozzle of an electric hot-air blower (20), such as a hairdryer or the like, to deliver hot air both into the container and onto it.

2. Apparatus according to claim 1, **characterized in that** said bell-shaped portion (12) is provided centrally in its interior with a funnel-like portion (14) having an array of apertures (16) that are equally spaced from each other along the inclined circumferential wall and are adapted to direct a flow of hot air onto the outer surface of the container (30).

3. Apparatus according to claim 1 or 2, **characterized in that** said bell-shaped portion (12) extends with a tubular prolongation (15) that is adapted to slip into the container (30) and is provided at an end portion thereof with apertures (17), which are adapted to send a flow of hot air into the container (30).

4. Apparatus according to claim 2 or 3, **characterized in that** said tubular prolongation (15) is provided on the outer surface thereof with ribs (18) forming a plurality of longitudinally extending channels for the air to be capable of escaping from the interior of the container.

5. Apparatus according to any of the preceding claims, **characterized in that** said bell-shaped portion (12) is provided internally with fins (19) extending radially from the inner wall of said bell up to said tubular prolongation (15).

6. Apparatus according to any of the preceding claims, **characterized in that** said sleeve-like portion (13) is deformable and is in a cylindrical shape with the side wall thereof provided with apertures (21)

7. Apparatus according to claim 6, **characterized in that** an elastic ring (22) is slipped on to the outside of the sleeve-like portion (13), so as to ensure the adaptability of the latter to the nozzle of the electric hot-air blower (20).
